(19) Europäisches Patentamt / European Patent Office / Office européen des brevets

(11) EP 4 181 479 A1

(12) EUROPEAN PATENT APPLICATION

(43) Date of publication:
**17.05.2023 Bulletin 2023/20**

(21) Application number: **22206799.3**

(22) Date of filing: **10.11.2022**

(51) International Patent Classification (IPC):
***H04L 47/2483*** *(2022.01)* ***H04L 47/25*** *(2022.01)*

(52) Cooperative Patent Classification (CPC):
**H04L 47/2483; H04L 47/25**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.11.2021 CN 202111349123**

(71) Applicant: **Huawei Technologies Co., Ltd.**
**Longgang District,**
**Shenzhen,**
**Guangdong 518129 (CN)**

(72) Inventors:
- **LI, Ling**
  **Shenzhen, 518129 (CN)**
- **GUAN, Zixuan**
  **Shenzhen, 518129 (CN)**
- **JI, Zhigang**
  **Shenzhen, 518129 (CN)**

(74) Representative: **Gill Jennings & Every LLP**
**The Broadgate Tower**
**20 Primrose Street**
**London EC2A 2ES (GB)**

# (54) METHOD FOR IDENTIFYING FLOW, AND APPARATUS

(57) Embodiments of this application provide a method for identifying a flow and an apparatus, and relate to the field of communication technologies, to improve accuracy of identifying an elephant flow and improve forwarding performance of a network service. A specific solution is as follows: A communication device counts, starting from an initial packet of a target flow, a received packet in a first filtering manner. When determining that a quantity of the received packets of the target flow is greater than or equal to a first threshold, the communication device marks, starting from a packet that exceeds the first threshold, a packet whose count is a multiple of m. When determining that a quantity of the received packets of the target flow is greater than or equal to a second threshold, the communication device counts, in a second filtering manner, a packet that is continuously received. When determining that a quantity of the received packets of the target flow is greater than or equal to a third threshold $\lambda_4$, the communication device determines that the target flow is an elephant flow, and marks a packet that is continuously received. Embodiments of this application are used in a process of identifying an elephant flow packet in a flow.

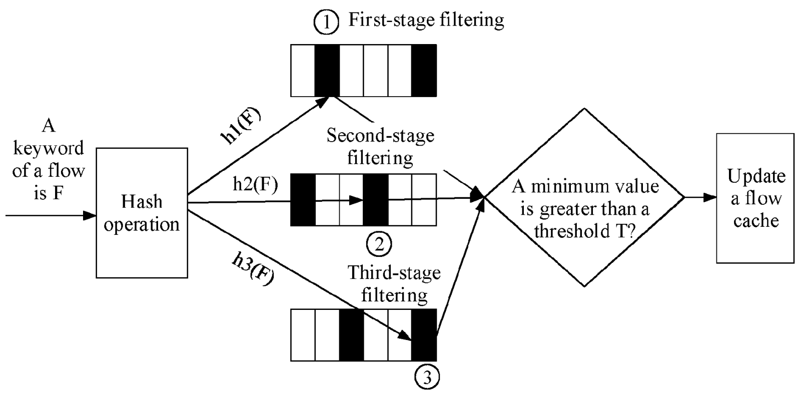


FIG. 1

EP 4 181 479 A1

## Description

### TECHNICAL FIELD

Embodiments of this application relate to the field of communication technologies, and in particular, to a method for identifying a flow, and an apparatus.

### BACKGROUND

Network traffic of a data center is characterized by various types of traffic, uneven traffic distribution, and rapid traffic growth. Once a caching length accumulated on a link exceeds an upper limit of a caching length that can be borne by the link, packet loss occurs temporarily to relieve a current congestion state of a network. A probability of discarding packets that have a same priority and that are in a same queue is the same. In other words, the packets are discarded as long as a caching length of the queue is exceeded. Generally, however, normal forwarding of a mice flow needs to be ensured. This is because transmission of the mice flow can be completed with only a small quantity of data packets. Once packet loss and retransmission occur, time for completing the transmission of the mice flow may be doubled compared with estimated completion time. This severely affects forwarding performance of a network service. Therefore, when congestion occurs in a network egress, rate limiting may be performed only on an elephant flow on the premise of ensuring the normal forwarding of the mice flow, to reduce a quantity of elephant flow packets arriving in a unit time and relieve caching pressure of a link egress.

To limit a rate of the elephant flow, the elephant flow needs to be identified first. If an entry specification of a device on the link is large enough, a quantity of packets in each flow may be counted. When the quantity of the packets obtained through counting exceeds a preset threshold, the flow may be marked as an elephant flow. However, in a real service scenario, millions or even tens of millions of flows need to be counted within a specific period of time. Accurate matching and identification take a long time. In addition, an entry specification of a switch device is limited and cannot meet a requirement. To save entry space and improve search efficiency, many elephant flow identification technologies based on a Hash algorithm are derived currently. Specifically, a Hash function is used to map each packet to a location of a vector, and a count of a corresponding vector location is viewed and is used as a basis for determining an elephant flow. However, in a current elephant flow identification method, a Hash collision easily occurs. To be specific, two flows are mapped to a same vector location. As a result, a mice flow is mistakenly marked as an elephant flow easily, a data packet of the mice flow is easily discarded, retransmission of the data packet of the mice flow is caused, and forwarding performance of the network service is affected.

### SUMMARY

Embodiments of this application provide a method for identifying a flow, and an apparatus, to improve accuracy of identifying an elephant flow and improve forwarding performance of a network service.

To achieve the foregoing objectives, the following technical solutions are used in embodiments of this application.

According to a first aspect, a method for identifying a flow is provided. The method includes: A communication device counts, starting from an initial packet of a target flow, a received packet in a first filtering manner. When determining that a quantity of the received packets of the target flow is greater than or equal to a first threshold, the communication device marks, starting from a packet that exceeds the first threshold, a packet whose count is a multiple of m, where m is an integer greater than or equal to 2. Alternatively, when determining that a quantity of the received packets of the target flow is greater than or equal to a second threshold, the communication device counts, in a second filtering manner, a packet that is continuously received, Alternatively, when determining that a quantity of the received packets of the target flow is greater than or equal to a third threshold $\lambda_4$, the communication device determines that the target flow is an elephant flow, and marks a packet that is continuously received. The communication device may be a switch.

In this way, in this application, a packet of the elephant flow can be identified by using a two-layer filtering method, and some packets in the elephant flow can be marked. In this way, rate limiting or discarding may be performed on the marked packet, and an unmarked packet may be forwarded normally. When a packet enters second-stage filtering and reaches a third threshold set in second-stage filtering, the packet is continuously marked. A larger flow indicates a larger total quantity of marked packets in a total quantity of packets in the flow. In this way, an elephant flow packet is sampled, to improve usage of entry storage space of the switch, and hierarchical processing can reduce a Hash collision. Further, accuracy of identifying the elephant flow packet can be improved, and a success rate of forwarding a mice flow is improved.

In a possible design, the method further includes: When determining that network congestion occurs, the communication device updates a forwarding rate of the marked packet, where an updated forwarding rate is less than an un-updated forwarding rate. Alternatively, when determining that network congestion occurs, the communication device discards the marked packet in the target flow. Discarding herein may also be understood as preferential discarding.

According to the method for identifying a flow provided in this application, an elephant flow identification method based on two-layer filtering can bypass the mice flow, and mark only the packet in the elephant flow. Actually, the rate limiting or discarding is performed only on the marked packet. If a total byte count of a flow is less than a threshold set in first-stage filtering, a maximum of 1/8 of packets are marked, and most packets are normally forwarded at an original rate. When a packet enters second-stage filtering and reaches a threshold $\lambda_4$ set in second-stage filtering, the packet is continuously marked. A larger flow indicates a larger total quantity of marked packets in a total byte count of packets. In this way, network congestion of a link can be relieved.

In a possible design, a data structure used in the first filtering manner is a Bloom filter. Counting a received packet in a first filtering manner includes: A Hash function and a vector that correspond to the Bloom filter are used to map the received packet of the target flow to a vector location corresponding to the target flow in a one-to-one manner, where a count of the corresponding vector location during each mapping increases by 1. The Bloom filter herein may be understood as a Bloom filter. In other words, the Hash function and the vector that correspond to the Bloom filter are used to map the received packet of the target flow to the vector location corresponding to the target flow in the one-to-one manner, where the count of the corresponding vector location during each mapping increases by 1.

In a possible design, that, when determining that a quantity of the received packets of the target flow is greater than or equal to a first threshold, the communication device marks, starting from a packet that exceeds the first threshold, a packet whose count is a multiple of m includes: When determining that the quantity of the received packets of the target flow is greater than or equal to the first threshold, the communication device determines that the target flow is a candidate elephant flow. The communication device marks, starting from the packet that exceeds the first threshold, a packet whose count is a multiple of $2^p$, where $m=2^p$, and p is an integer greater than or equal to 1. For example, when p=3, packets whose counts are 104, 112, 120, 128, and so on may be marked, or it may be understood that the switch marks the received $104^{th}$ packet, $112^{th}$ packet, $120^{th}$ packet, $128^{th}$ packet, and so on.

In a possible design, a data structure used in the second filtering manner is a sketch data structure. Counting, in a second filtering manner, a packet that is continuously received includes: The second filtering manner is used to map the packet that is continuously received to w×d counters by using d Hash functions, and a minimum value in counting results of the wd counters is determined as a quantity of currently received packets, where w and d are integers greater than 1. To be specific, if a quantity of the packets received by the switch is greater than or equal to the second threshold, second-layer filtering is performed, and the second filtering manner is used in second-layer filtering. In this way, when the packet enters second-stage filtering and reaches the third threshold set in second-stage filtering, the packet is continuously marked. A larger flow indicates a larger total quantity of marked packets in a total quantity of the packets in the flow. In this way, the elephant flow packet is sampled, to improve usage of the entry storage space of the switch, and the hierarchical processing can reduce the Hash collision.

In a possible design, the method further includes: The communication device updates the third threshold based on accuracy of receiving a packet by the communication device and a false positive rate. If a parameter, namely, the third threshold, needs to be adjusted next time, packet sampling, identification, and packet capture processing may be performed again by using a new parameter, to calculate new accuracy, so as to determine a re-updated third threshold.

According to a second aspect, a communication device is provided. The communication device includes: a counting unit, configured to count, starting from an initial packet of a target flow, a received packet in a first filtering manner; and a marking unit, configured to: when it is determined that a quantity of the received packets of the target flow is greater than or equal to a first threshold, mark, starting from a packet that exceeds the first threshold, a packet whose count is a multiple of m, where m is an integer greater than or equal to 2. The counting unit is further configured to: when it is determined that a quantity of the received packets of the target flow is greater than or equal to a second threshold, count, in a second filtering manner, a packet that is continuously received. The marking unit is further configured to: when it is determined that a quantity of the received packets of the target flow is greater than or equal to a third threshold, determine that the target flow is an elephant flow, and mark a packet that is continuously received.

In a possible design, the device further includes a congestion processing unit configured to: When it is determined that network congestion occurs, update a forwarding rate of a marked packet, where an updated forwarding rate is less than an un-updated forwarding rate; or when it is determined that network congestion occurs, discard a marked packet in the target flow.

In a possible design, a data structure used in the first filtering manner is a Bloom filter. The counting unit is specifically configured to map, by using a Hash function and a vector that correspond to the Bloom filter, the received packet of the target flow to a vector location corresponding to the target flow in a one-to-one manner, where a count of the corresponding vector location during each mapping increases by 1.

In a possible design, the marking unit is specifically configured to: when it is determined that the quantity of the received packets of the target flow is equal to the first threshold, determine that the target flow is a candidate elephant flow; and mark, starting from the packet that exceeds the first threshold, a packet whose count is a multiple of $2^p$, where $m=2^p$, and p is an integer greater than or equal to 1.

In a possible design, a data structure used in the second filtering manner is a sketch data structure. The counting unit is specifically configured to: map, in the second filtering manner, the packet that is continuously received to $w \times d$ counters by using d Hash functions, and determine a minimum value in counting results of the wd counters as a quantity of currently received packets, where w and d are integers greater than 1.

In a possible design, the device further includes an updating unit configured to update the third threshold based on accuracy of receiving a packet by the communication device and a false positive rate.

According to a third aspect, a communication apparatus is provided. The apparatus includes at least one processor. The at least one processor is connected to a memory. The at least one processor is configured to read and execute a program stored in the memory, to enable the apparatus to perform the method according to the first aspect or any one of the first aspect.

According to a fourth aspect, a chip is provided. The chip is coupled to a memory, and is configured to read and execute program instructions that are stored in the memory, to implement the method according to the first aspect or any one of the first aspect.

According to a fifth aspect, a communication device is provided. The communication device includes a memory and a processor. The memory is coupled to the processor. The memory is configured to store computer program code. The computer program code includes computer instructions. A transceiver is configured to receive data and send data. When the processor executes the computer instructions, a cloud center is enabled to perform the method for identifying a flow according to the first aspect or any one of the corresponding possible designs of the first aspect.

According to a sixth aspect, this application provides a chip system. The chip system is applied to a cloud center. The chip system includes one or more interface circuits and one or more processors. The interface circuit and the processor are interconnected through a line. The interface circuit is configured to receive a signal from a memory of the cloud center, and send the signal to the processor. The signal includes computer instructions stored in the memory. When the processor executes the computer instructions, the cloud center performs the method for identifying a flow according to the first aspect or the corresponding possible designs of the first aspect.

According to a seventh aspect, an embodiment of this application provides a communication apparatus. The apparatus is included in an electronic device. The apparatus has a function of implementing a behavior of an electronic device in any one of the foregoing aspects and any possible implementation. The function may be implemented by hardware, or may be implemented by hardware executing corresponding software. The hardware or the software includes one or more modules or units corresponding to the foregoing function, for example, a counting module or unit, a marking module or unit, a congestion processing module or unit, or an updating module or unit.

According to an eighth aspect, an embodiment of this application provides a switch. The switch includes one or more processors and one or more memories. The one or more memories are coupled to the one or more processors. The one or more memories are configured to store computer program code. The computer program code includes computer instructions. When the one or more processors execute the computer instructions, an electronic device is enabled to perform the method for identifying a flow according to any one of the foregoing aspects and any possible implementation.

According to a ninth aspect, an embodiment of this application provides a computer-readable storage medium, including computer instructions. When the computer instructions are run on an electronic device, the electronic device is enabled to perform the method for identifying the flow according to any one of the foregoing aspects and any possible implementation.

According to a tenth aspect, an embodiment of this application provides a computer program product. When the computer program product runs on a computer or a processor, the computer or the processor is enabled to perform the method for identifying the flow according to any one of the foregoing aspects and any possible implementation.

It may be understood that any one of the communication device, the switch, the chip system, the computer-readable storage medium, the computer program product, or the like provided above may be applied to the corresponding method provided above. Therefore, for beneficial effects that can be achieved by the communication device, the switch, the chip system, the computer-readable storage medium, the computer program product, or the like, refer to beneficial effects in the corresponding method. Details are not described herein again.

These aspects or other aspects in this application are more concise and comprehensible in the following descriptions.

**BRIEF DESCRIPTION OF DRAWINGS**

FIG. 1 is a schematic diagram of a processing procedure of a multi-stage Bloom filter algorithm according to an embodiment of this application;

FIG. 2 is a schematic diagram of identifying a packet by using a sketch method according to an embodiment of this application;
FIG. 3 is a schematic diagram of identifying an elephant flow by using a bitmap according to an embodiment of this application;
FIG. 4 is a schematic diagram of discarding a packet during network congestion according to an embodiment of this application;
FIG. 5 is a schematic diagram of limiting a rate of a packet during network congestion according to an embodiment of this application;
FIG. 6 is a schematic diagram of a structure of a switch according to an embodiment of this application;
FIG. 7 is a schematic flowchart of a method for identifying a flow according to an embodiment of this application;
FIG. 8 is a schematic diagram of a calculation procedure for identifying a flow according to an embodiment of this application;
FIG. 9 is a schematic flowchart of a method for identifying a flow according to an embodiment of this application;
FIG. 10 is a schematic diagram of a calculation procedure for identifying a flow according to an embodiment of this application;
FIG. 11 is a schematic diagram of a structure of a communication device according to an embodiment of this application;
FIG. 12 is a schematic diagram of a structure of a switch according to an embodiment of this application; and
FIG. 13 is a schematic diagram of a structure of a communication device according to an embodiment of this application.

## DESCRIPTION OF EMBODIMENTS

For ease of understanding, example descriptions of some concepts related to embodiments of this application are provided for reference. Details are described as follows.

A data center is a central storage place for information and data, and may be used by a surrounding networked enterprise or organization to store, manage, and spread information.

A data center network connects resources in a data center.

A cache is a buffer area for data exchange.

A priority is a category used to determine relative importance of a fault, a problem, or a change.

A queue is a limited cache space for receiving a packet. Packets enter different queues based on priorities and are forwarded in sequence.

Congestion is extra inter-network or intra-network traffic that reduces network service efficiency.

A mice flow is a process of transmitting a small amount of data in a short time through a network link.

An elephant flow is a process of continuously transmitting a large amount of data through a network link.

An entry specification is a size of entry storage space.

A core switch is a backbone part of a network, referred to as a core layer. The core layer aims at high-speed forwarding and providing a reliable backbone transmission interface. Therefore, the core switch has higher reliability, performance, and throughput.

A Hash function is used to map a data set of any length to a fixed length.

A Hash algorithm is used to calculate any group of input data to obtain a fixed-length output and fills the output in a corresponding location in a Hash table. A same output is certainly obtained in case of a same input. There is a high probability that different outputs are obtained in case of different inputs.

A false positive rate is a ratio of marked data packets to data packets that should not be marked in total data packets.

A false negative rate is a ratio of unmarked data packets to data packets that should be marked in total data packets.

A Hash collision means that different input data is processed by a same Hash algorithm and mapped to a same Hash value.

Differentiated services code point (Differentiated Services Code Point, DSCP) uses, according to the quality of service (Quality of Service, QoS) classification standard of a differentiated service (Diff-Serv), in a type of service (Type of Service, TOS) byte of an Internet Protocol (Internet Protocol, IP) header of each data packet, used 6 bits and unused 2 bits are used to distinguish a priority by using a code value. The DSCP is an identifier of the used 6 bits in the TOS byte, and is a combination of "IP precedence" and "type of service" fields. To use an old router that supports only "IP precedence", a DSCP value is used. This is because the DSCP value is compatible with the "IP precedence" field. Each DSCP code value is mapped to a defined PHB (Per-Hop Behavior) identification code. A terminal device may identify traffic by entering the DSCP value.

The following describes the technical solutions in embodiments of this application with reference to the accompanying drawings in embodiments of this application. In description in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in description in embodiments of this application, "a plurality of" means two or more.

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more such features. In description of the embodiments, unless otherwise stated, "a plurality of" means two or more than two.

Currently, to save entry space in a device, for example, a switch, and improve search efficiency, there are a plurality of elephant flow identification technologies based on a Hash algorithm. Specifically, in these Hash algorithms, a Hash function is used to map a received packet to a location of a vector, a count of a corresponding vector location is checked, and the count is used as a basis for determining an elephant flow. Based on different data structures used in the Hash algorithm, the elephant flow identification methods based on a Hash algorithm may be classified into a Bloom filter (Bloom filter) method and a sketch method.

An idea of identifying the elephant flow by using a Bloom filter is simple. In the algorithm, a Hash function and a vector may be used, and initial counts of vector locations are all 0. The Hash function maps packets of a flow to a vector location one by one, and a count increases by 1 during each mapping. Packets of a same flow is mapped to a same vector location. Therefore, when an accumulated count exceeds a selected threshold, the flow may be marked as an elephant flow. Therefore, a method for identifying the elephant flow through counting by using the Bloom filter is simple and easy to operate.

In an upgraded version of the Bloom filter, the packet of the flow may be mapped to a plurality of vectors by using a plurality of Hash functions and by using a multi-stage Bloom filter. The flow is identified as the elephant flow only when values of counters of corresponding vector locations at all stages are greater than a threshold.

FIG. 1 is a schematic diagram of a processing procedure of a multi-stage Bloom filter algorithm. It is assumed that a keyword of a flow is F. A switch receives a packet of the flow and performs a Hash operation once when receiving one packet each time. The multi-stage Bloom filter shown in FIG. 1 is a three-stage Bloom filter: a first-stage Bloom filter (first-stage filtering in FIG. 1), a second-stage Bloom filter (second-stage filtering in FIG. 1), and a third-stage Bloom filter (third-stage filtering in FIG. 1), and Hash functions respectively corresponding to the three-stage Bloom filter are h1(F), h2(F), and h3(F). The Bloom filter of each stage includes a plurality of vector locations, and locations of vector locations to which the packet of the flow is mapped in the Bloom filter of each stage by using a Hash function are the same. It is assumed that a keyword of each packet of the flow is mapped to a vector location (1) by using the h1(F) and a vector of the first-stage Bloom filter, mapped to a vector location (2) by using the h2(F) and a vector of the second-stage Bloom filter, and mapped to a vector location (3) by using the h3(F) and a vector of the third-stage Bloom filter. In this case, a minimum value of counts in the vector location (1), the vector location (2), and the vector location (3) may be used. If the minimum value is greater than a threshold T, it is determined that the flow is an elephant flow. Once congestion occurs, an enqueuing rate of an elephant flow packet may be controlled. For example, the elephant flow packet to be enqueued may be preferably discarded to relieve network congestion.

However, in some scenarios, a Hash collision easily occurs in a method for identifying an elephant flow through counting by using the Bloom filter. To be specific, two flows are mapped to a same vector location. In this way, when a mice flow is also mistakenly marked as the elephant flow, a packet of the mice flow is also mistakenly discarded. This may be understood as false positive misjudgment. Even if a quantity of stages is increased, the false positive misjudgment still exists. To be specific, a flow less than the threshold is misjudged as an elephant flow.

For another sketch method, in Count-min(CM) sketch, as shown in FIG. 2, d Hash functions ($h_1$, $h_2$, ..., $h_d$) may be mapped to w×d counters. The CM sketch herein is actually a matrix with d rows and w columns. Each row of the matrix corresponds to a Hash function, and then a minimum value in all counting results is used as a final decision value. w and d are integers greater than 1. In FIG. 2, $i_t$ indicates a flow, and ct indicates a counting result of each row. When the counting model is used, a flow has $w^d$ mapping results. This can reduce a collision between flows. Therefore, a CM sketch counting method is applicable to elephant flow identification in a scenario in which there is a large quantity of flows.

Similar to the Bloom filter, an elephant flow identification technology based on the CM sketch still has the Hash collision, that is, false positive misjudgment exists. In addition, the CM sketch counting method is high in space complexity, and is complex during implementation.

Therefore, this application provides two simple and easy-to-operate elephant flow identification methods, which are applicable to an elephant and mice flow identification scenario, and in particular, can effectively resolve an elephant flow identification problem in a scenario in which entry specification resources of a network device, for example, a switch, are limited, to improve usage of storage space of the network device, for example, the switch.

In a first method, this application provides an adaptive elephant flow identification method based on two-stage filtering. For example, when an initial packet of a flow is received, first-stage filtering may use a Bloom filter, to mark a packet that exceeds a threshold and is a multiple of a value. In this case, it may be considered that the flow is a candidate elephant flow. When a count of a packet exceeds an upper limit, the packet enters a second-stage filtering CM sketch. When a count of the packets at a second stage exceeds a threshold. In this case, it is considered that the flow is an elephant flow. A packet that is continuously received and that is of the flow is marked.

In a second method, this application provides a bitmap (bitmap) elephant flow identification method. In this method, Hash calculation may be performed on a quintuple of a packet of a flow. A Hash value corresponds to a bit, and a probability value is set to 0 or 1 through probability calculation. If bitmap values are all 1, the flow may be marked as an elephant flow. As shown in FIG. 3, it is assumed that three Hash functions are used. When Hash calculation is performed on each packet, only a bit corresponding to a calculated value counter needs to be correspondingly found. In this case, one flow needs only storage space of 3 bits. Compared with that in a Hash table, storage space utilization is more efficient.

The two methods may be applied to a plurality of scenarios. For example, in a scenario 1, when a cache at a link egress in a network is fully occupied, in the conventional technology, regardless of whether the flow is an elephant flow or a mice flow, newly arriving packets of a flow are discarded together. However, by using the elephant flow identification method in this application, a packet belonging to the elephant flow may be identified, and a packet (color) that is discarded with a high probability may be marked. In this way, the marked packet in the elephant flow may be discarded, and a case in which a packet of the mice flow is discarded does not occur.

As shown in FIG. 4, when packets of the elephant flow are enqueued, the marked packet in the elephant flow is discarded before entering a queue of a cache.

In a scenario 2, to reduce a packet loss rate of a network device, rate limiting needs to be performed on a flow of the network device. In this application, an elephant flow identification technology is used, so that a rate limiting policy can be applied only to the elephant flow, to ensure that the packet of the mice flow is not limited in rate and can be normally forwarded.

As shown in FIG. 5, before the elephant flow is identified, that is, before the rate limiting is performed, four marked packets of the packets of the flow may be enqueued in a time period from t0 to t1. After the elephant flow is identified, that is, after the rate limiting is performed, two marked packets of the packets of the flow may be enqueued in the time period from t0 to t1.

In addition to the two scenarios, the method for identifying the elephant flow in this application may be further applied to another scenario.

The method for identifying the elephant flow in this application may be applied to the network device, for example, the switch. The switch is used as an example. As shown in FIG. 6, an apparatus for identifying the elephant flow in the switch may include a receiving module, a mapping module, a register (for example, a hardware high-speed register), a register clearing module, a determining module, and a sending module. The receiving module may be configured to receive a packet of a flow that arrives at the switch. The mapping module may be configured to perform a Hash calculation based on data of the packet, for example, map the packet to a vector location or a bit. The register may be configured to count a quantity of mapping times. The determining module may be configured to determine, based on a count of the register, whether a packet needs to be marked. The sending module may be configured to output the packet to a link. The register clearing module may be configured to clear the count of the register at intervals.

The following first describes the first method in this application.

## Embodiment 1

An embodiment of this application provides a method for identifying a flow. As shown in FIG. 7, the method includes the following steps.

701: A communication device counts, starting from an initial packet of a target flow, a received packet in a first filtering manner.

In this application, a communication device switch is used as an example for description.

It is assumed that the target flow is denoted as a flow f. When receiving the initial packet of the flow f, that is, the 1$^{st}$ packet, the switch may count, starting from the 1$^{st}$ packet, the packet in the first filtering manner. Counting herein may be understood as first-layer filtering.

In some embodiments, a data structure used in the first filtering manner is a Bloom filter, namely, the Bloom filter mentioned above.

Counting a received packet in a first filtering manner may include:

a Hash function and a vector that correspond to the Bloom filter are used to map the received packet of the target flow to a vector location corresponding to the target flow in a one-to-one manner, where a count of the corresponding vector location during each mapping increases by 1.

Herein, a single-stage Bloom filter may be used for counting, or a multi-stage Bloom filter shown in FIG. 1 may be used for counting. When the Bloom filter is used for counting, a minimum value in counts of a plurality of stages is compared with a first threshold $\lambda_1$, to determine whether the minimum value is greater than or equal to the first threshold $\lambda_1$.

It is assumed that when the single-stage Bloom filter is used for counting, if there is a counting vector A including $w_1$ counters, a Hash function h may evenly map each packet of the flow f to [0, $w_1$-1] counters based on a flow ID, and a count increases by 1 during each mapping. Then, a count obtained through each mapping is compared with the first threshold $\lambda_1$.

As shown in FIG. 8, an operation of adding 1 to each packet of the flow f by using a Hash function h and a counting vector A, for example, may be *A*[h(*f*)]+=1.

702: When determining that a quantity of the received packets of the target flow is greater than or equal to a first threshold, the communication device marks, starting from a packet that exceeds the first threshold, a packet whose count is a multiple of m, namely, ($\lambda$2), where m is an integer greater than or equal to 2.

In some embodiments, when determining that the quantity of the received packets of the target flow is greater than or equal to the first threshold $\lambda_1$, the communication device determines that the target flow is a candidate elephant flow.

It is assumed that m is a power of 2, namely, $2^p$, the switch may mark, starting from the packet that exceeds the first threshold, the packet whose count is a multiple of $2^p$, where m=$2^p$, and p is an integer greater than or equal to 1.

For example, it is assumed that $\lambda_1$=100. when receiving the 100th packet of the flow f, the switch determines that the flow f is the candidate elephant flow. If the switch continues to receive the packet of the flow f, that is, [h(*f*)]≥$\lambda_1$, the switch may mark a packet whose current count is a multiple of $2^p$ in the received packets. For example, when p=3, packets whose counts are 104, 112, 120, 128, and so on may be marked, or it may be understood that the switch marks the received 104th packet, 112th packet, 120th packet, 128th packet, and so on. If the switch receives the packets based on sequence numbers of the packets, it may also be understood that the switch marks the packets whose sequence numbers are 104, 112, 120, 128, and so on.

As shown in FIG. 8, it is assumed that m, for example, is $\lambda_2$, a condition for marking the packet in Step 702, for example, may be: *A*[*h*(*f*)]2≥$\lambda_1$, and *A*[h(*f*)]mod $\lambda_2$=0. To be specific, starting from the 101st received packet, a packet that does not meet the condition is not marked.

703: When determining that a quantity of the received packets of the target flow is greater than or equal to a second threshold, the communication device counts, in a second filtering manner, a packet that is continuously received.

In some embodiments, if a quantity of the packets received by the switch is greater than or equal to the second threshold $\lambda_3$, second-layer filtering is performed, and the second filtering manner is used in second-layer filtering.

For example, a data structure used in the second filtering manner is a sketch data structure, and may be understood as the CM sketch mentioned above.

Therefore, Counting, in a second filtering manner, a packet that is continuously received may include:
the second filtering manner is used to map the packet that is continuously received to w×d counters by using d Hash functions, and a minimum value in counting results of the wd counters is determined as a quantity of currently received packets, where w and d are integers greater than 1.

For example, it is assumed that the second threshold $\lambda_3$ is 500, the CM sketch herein is denoted as CM sketch C, and includes d counting vectors. Each counting vector $C_i$ ($C_1$, $C_2$, ..., or $C_d$) includes $w_2$ counters. A packet, starting from the 501st packet, is evenly mapped to [0, $w_2$-1] based on the flow ID of the flow f by using a Hash function group $g_i$. *D*=1, 2, ..., and $w_2 \leq w_1$. As shown in FIG. 8, a process of counting the packet, starting from the 501st packet, by using the Hash function group $g_i$ and the counting vector $C_i$ may be, for example, $C_i[g_t(f)]$+=1, where i=1, 2, ..., d.

704: When determining that a quantity of the received packets of the target flow is greater than or equal to a third threshold, the communication device determines that the target flow is an elephant flow, and marks a packet that is continuously received. Then, Step 705 or Step 706 is performed.

If a count of the packet that is continuously received by the switch starting from the 501st packet is greater than or equal to the third threshold $\lambda_4$, it may be determined that the flow f is an elephant flow.

For example, it is assumed that when the switch starts to perform the second-layer filtering, a minimum value in calculation results of each packet, starting from the 501st packet, relative to d vectors C may be compared with the third threshold $\lambda_4$. If a minimum value obtained through calculation for is min($C_1[g_1(f)]$, $C_2[g_2(f)$, ..., $C_d[g_d(f)]]$, when min($C_1[g_1(f)]$, $C_2[g_2(f)$, ..., $C_d[g_d(f)]$)≥$\lambda_4$, a packet subsequently continuously received after the packet may be marked, as shown in FIG. 8.

For example, it is assumed that starting from the 501st packet, when the 501st packet is considered as the 1st received packet, the packet that is continuously received is counted by using the CM sketch. In calculation results of a packet, if min($C_1[g_1(f)]$, $C_2[g_2(f)$, ..., $C_d[g_d(f)]]$≥$\lambda_4$, and $\lambda_4$=50, a packet that is continuously received may be marked starting from the 50th packet. Actually, it may also be understood that the packet that is received may be continuously marked starting from the 550th packet.

705: When determining that network congestion occurs, the communication device updates a forwarding rate of a marked packet, where an updated forwarding rate is less than an un-updated forwarding rate.

In some embodiments, when the switch determines that the network congestion occurs, for example, storage space of a cache of the switch has no remaining space, the switch may limit a rate of a marked packet in the determined elephant flow. Rate limiting herein may be understood as reducing a rate at which the marked packet in the elephant flow is enqueued. A principle is similar to that in FIG. 5.

706: When determining that network congestion occurs, the communication device discards the marked packet in the target flow.

In some embodiments, when the switch determines that the network congestion occurs, for example, storage space of a cache of the switch has no remaining space, the switch may discard an elephant flow packet, namely, the marked packet in the flow f, to relieve pressure of the cache in the switch and improve a success rate of transmission of a mice flow.

In this way, in this application, a packet of the elephant flow can be identified by using a two-layer filtering method, and some packets in the elephant flow can be marked. In this way, rate limiting or discarding may be performed on the marked packet, and an unmarked packet may be forwarded normally. When a packet enters second-stage filtering and reaches a third threshold set in second-stage filtering, the packet is continuously marked. A larger flow indicates a larger total quantity of marked packets in a total quantity of packets in the flow. In this way, the elephant flow packet is sampled, to improve usage of entry storage space of the switch, and hierarchical processing can reduce a Hash collision. Further, accuracy of identifying the elephant flow packet can be improved, and a success rate of forwarding the mice flow is improved.

To describe an effect brought by the two-layer filtering method provided in this application, a marking ratio test model is provided: A fixed total quantity of flows is 400, and a percentage of a total byte count of a marked packet to a total byte count of a total quantity of packets is calculated by changing a byte count (for example, 80 KB, 200 KB, or 10 MB) for sending each of flows with different byte counts.

It is assumed that the foregoing parameters are set as follows: $\lambda_1$=100, $\lambda_2$=8, $\lambda_3$=256, and $\lambda_4$=50.

An aging rate of a counter is that a count decreases by 1 every 1 ms.

A DSCP of the unmarked packet is CS1, and a DSCP of the marked packet is AF13.

Table 1 shows test results.

**Table 1**

| Byte count for sending a single flow | Byte count for the CS 1 packet | Byte count for the AF13 packet | Percentage of the AF13 packet |
|---|---|---|---|
| 80 KB | 15866256 | 0 | 0.0% |
| 200 KB | 28249596 | 885868 | 3.0% |
| 10 MB | 41836422 | 40623166 | 97.1% |

It can be found from Table 1 that: (1) the mice flow is not marked, for example, there is no marked packet in the mice flow whose byte count is 80 KB; and (2) for a flow that exceeds 100 KB, a larger byte count of a sent flow indicates a higher ratio of marked packets. For a larger flow, for example, a 10 MB flow, a probability of marked packets is close to 100%.

Therefore, according to the method for identifying a flow provided in this application, an elephant flow identification method based on two-layer filtering may bypass the mice flow, and mark only the packet in the elephant flow. Actually, the rate limiting or discarding is performed only on the marked packet. If a total byte count of a flow is less than a threshold set in the first-stage filtering, a maximum of 1/8 of the packets are marked, and most packets are normally forwarded at an original rate. When a packet enters second-stage filtering and reaches a threshold $\lambda_4$ set in second-stage filtering, the packet is continuously marked. A larger flow indicates a larger total quantity of marked packets in of a total byte count of packets.

In addition, this application further provides an adaptive parameter adjustment method, to adaptively adjust a parameter based on accuracy and a false positive rate of a packet. The parameter herein may be, for example, the foregoing $\lambda_1$, $\lambda_2$, $\lambda_3$, and $\lambda_4$.

This application provides two adaptive parameter adjustment solutions herein. In a possible manner, the parameters $\lambda_1$, $\lambda_2$, and $\lambda_3$ may be fixed, and the parameter $\lambda_4$ may be adjusted. In this case, this embodiment of this application may further include: 707 (not shown in FIG. 7): The communication device updates the third threshold $\lambda_4$ based on accuracy of receiving the packet by the communication device and the false positive rate.

Calculation of the accuracy may be determined based on the false positive rate $f_{wrong}$ and a false negative rate $f_{\mathrm{loss}}$ of the packet.

For example, the switch may perform packet capture and counting on a flow, and record a total quantity of packets of the elephant flow as $N_{\mathrm{e}}$, and a total quantity of packets of the mice flow as $N_m$. A quantity of the marked packets in the elephant flow is $N_{\mathrm{e}}$', and a quantity of marked packets in the mice flow is $N_m$'. The false positive rate $f_{wrong}$

and a false negative rate $f_{loss}$ may be obtained based on a definition of the false positive rate, namely, a ratio of marked data packets to data packets that should not be marked in total data packets, and a definition of the false negative rate, namely, a ratio of unmarked data packets to data packets that should be marked in the total data packets:

$$f_{wrong}= N_m'/N_m, \text{ and } f_{loss}=(N_e-N_e')/N_e.$$

Then, based on a calculation manner of the accuracy fright, namely, 1-(false positive rate + false negative rate)/2, the following may be obtained:

$$f_{right}=1-(f_{wrong}+f_{loss})/2.$$

A false negative may be understood as that an elephant flow packet that should be marked is not marked. To be specific, the false negative rate=a quantity of unmarked elephant flow packets/a total quantity of elephant flow packets.
A false positive may be understood as that a mice flow packet in the mice flow is mistakenly marked as the elephant flow packet. To be specific, a false positive rate=a quantity of the mice flow packets that are mistakenly marked as the elephant flow packet/a total quantity of mice flow packets.
Based on this, it may be understood that in this application, $\lambda_1$ is a threshold used to mark a packet, and in case of being greater than $\lambda_1$, a flow may be classified as an elephant flow candidate.
$\lambda_2$ may be understood as a sampling rate of packets and is set to a power of 2. A larger value of $\lambda_2$ indicates a lower false positive rate and a higher false negative rate.
When a quantity of packets exceeds $\lambda_3$, the packet needs to enter second-layer filtering. A larger value of $\lambda_3$ indicates a lower false positive rate and a higher false negative rate.
$\lambda_4$ may be understood as a threshold used to mark a packet. A larger value of $\lambda_4$ indicates a lower false positive rate and a higher false negative rate.
Therefore, this application provides two solutions for adjusting the third threshold $\lambda_4$.
Solution 1: Initialize parameters: $\lambda_1$=100, $\lambda_2$=8, $\lambda_3$=256, and $\lambda_4$=n.

(1) It is assumed that a packet of a flow f of a service is known. $f_{right}$ is calculated after sampling and packet capturing are performed on the packet of the flow f.
(2) A threshold $\varepsilon_f \in (1/2-1/2\lambda_2, 1/2+1/2\lambda_2)$ is given.

If $f_{right} \geq \varepsilon_f$, or $\lambda_4$=n/2, $\lambda_4$ remains unchanged, the adjustment ends, and $\lambda_4$ is returned.
If $f_{right} < \varepsilon_f$, a value of $\lambda_4$ may be updated to: $\lambda_4$= m(*n*/2,(1-$\delta_f$)×$\lambda_4$), where $\delta_f \in (0,0.5)$.
Then, (1) continues to be performed. In other words, if $f_{right} < \varepsilon_f$, packet sampling, identification, and packet capture processing may be performed again by using a new parameter, to calculate a new *fright,* so as to determine $\lambda_4$ that is updated again. When $f_{right} \geq \varepsilon_f$, or $\lambda_4$=n/2, the adjustment ends.
Solution 2: Initialize parameters: $\lambda_1$=100, $\lambda_2$=8, $\lambda_3$=256, and $\lambda_4$=n.

(1) It is assumed that a packet of a flow f of a service is known. $f_{right}$ is calculated after sampling and packet capturing are performed on the packet of the flow f.
(2) A threshold $\varepsilon_f \in (0,1/2\lambda_2)$ is given.

If $f_{right} \leq \varepsilon_f$, or $\lambda_4$=n/2, $\lambda_4$ remains unchanged, the adjustment ends, and $\lambda_4$ is returned.
If $f_{right} > \varepsilon_f$, a value of $\lambda_4$ may be updated to: $\lambda_4$= m(n/2, (1-$\delta_f$)×$\lambda_4$). where $\delta_f \in (0,0.5)$.
Then, (1) continues to be performed. In other words, if $f_{right} < \varepsilon_f$, packet sampling, identification, and packet capture processing may be performed again by using a new parameter, to calculate a new *fright,* so as to determine $\lambda_4$ that is updated again. When $f_{right} \geq \varepsilon_f$, or $\lambda_4$=n/2, the adjustment ends.
In some embodiments, in this application, alternatively, refer to Solution 1 or Solution 2, different training samples are input to the switch to train the parameter $\lambda_4$, and an average value of all training results is used as a final $\lambda_4$ value.
The following further describes the second method provided in this application, namely, the bitmap elephant flow identification method.

## Embodiment 2

It should be understood that, in Embodiment 1 of this application, the elephant flow and the mice flow are identified in a manner of counting the packet of the target flow. The counter or the register in the switch generally performs counting by using a 16-bit or 32-bit data structure. This still occupies a specific amount of storage space of the register. It may be understood that, in this application, for a target flow, only whether the target flow is the elephant flow or the mice flow needs to be queried, and a specific flow size is not critical. Therefore, theoretically, whether the target flow is the elephant flow or the mice flow may be identified by using 1 bit. For example, 0 represents the mice flow, and 1 represents the elephant flow. Because the quantity of the packets of the target flow cannot be counted, a manner in which the 1 bit changes from 0 to 1 may be probability marking. To be specific, when each packet of the flow arrives at the communication device, whether the packet needs to be marked as the elephant flow packet may be determined according to a specific probability p. Statistically, if the flow is large enough and the quantity of the packets arriving at the communication device is large enough, the flow is certainly identified as the elephant flow.

Based on this theory, an embodiment of this application provides a method for identifying a flow. As shown in FIG. 9, the method includes the following steps.

901: A communication device performs, starting from an initial packet of a target flow, N Hash calculations based on a 5 -tuple in each received packet, to determine N bits in a bit sequence that are of results of the N Hash calculations performed on each packet, where the bit sequence is obtained through integration based on storage space of the communication device.

The bit sequence herein is obtained through integration based on the storage space of the communication device. It may be understood that the communication device integrates all storage space of the communication device into a continuous bit sequence.

For generating the continuous bit sequence, this application provides a generation method, but is not limited to the method.

In the method, it is assumed that the storage space includes X data structures, each data structure is Y bit, and a target is to generate a bit sequence of an X×Y size and may be used for operation query. For example, there is an entry space of a 4 K specification in the communication device, and an entry in the entry space occupies 64 bits. In this case, X=4,000 and Y=64 herein, to obtain a 4,000×64 continuous bit sequence.

Based on this, that a communication device performs N Hash calculations based on a 5-tuple in each received packet may be understood as follows: N Hash functions are preset in the communication device, for example, N is 3, 4, or 5, an input (key) of each Hash function is the 5-tuple in the packet, and a calculation result (value) obtained after the Hash calculation may be understood as a location in the bit sequence. In this way, N bits are obtained.

When receiving each packet in the target flow, the communication device may perform the N Hash calculations on the packet based on the N Hash functions, to obtain N Hash calculation results. Then, the communication device may determine N different bits in the bit sequence based on the N Hash calculation results.

In some embodiments, when that the N bits in the bit sequence that are of the results of the N Hash calculations performed on each packet is determined, if a value of the Hash calculation result obtained for each packet may be divided into two parts, a part of the value is mapped to 1 to X, to determine a data structure, and the other part of the value is mapped to 1 to Y, to determine a bit in the data structure.

The 5-tuple includes a source IP address, a destination IP address, a source port number, a destination port number, and a protocol number that are carried in the packet.

Corresponding to Step 901, refer to FIG. 10, it is assumed that a switch starts to receive a packet of a target flow f, and performs calculation based on the N Hash functions. i represents the $i^{th}$ Hash function, an initial value of i is 1, and a value ranges from 1 to N. i in $g_i(f)$ represents the $i^{th}$ Hash function, and $g_i(f)$ indicates that calculation is performed on the packet in the target flow f based on the $i^{th}$ Hash function. $C_i[g_i(f)]$ represents a bit value at which the packet in the target flow f is mapped to a bit by using the Hash function $g_i(f)$, and the bit value is 0 or 1.

902: The communication device determines, based on probability calculation manners respectively corresponding to the N bits that are obtained by performing Hash mapping on each packet, bit values respectively corresponding to the N bits.

When the N bits that are of each packet and that correspond to the bit sequence are determined, it may be determined, based on an independent probability P of each bit, that the bit value of the bit is 0 or 1. If a value of any one of the N bits is already 1, the communication device may not perform any operation on the value of the bit. If a value of any one of the N bit is 0, the communication device may update the value of the bit from 0 to 1.

For example, if it is determined, in a probability calculation manner, that a value of the $y^{th}$ bit in the data structure needs to be updated from 0 to 1 ($1 \le y \le Y$), the data structure may be marked as 2 raised to the power of y. For example, for the foregoing 64-bit entry, if a value of the $15^{th}$ bit needs to be updated from 0 to 1, the entry needs to increases by $2^{15}$=32768 to meet a requirement.

Based on a process in FIG. 10, $C_i[g_i(f)]=1$? indicates that whether a bit value that is calculated based on the $i^{th}$ Hash function and that is of a currently received packet is 1 is determined. If $C_i[g_i(f)]=1$, no processing is performed, and calculation continues to be performed according to a next Hash function, that is, i=i+1 is performed. If $C_i[g_i(f)] \neq 1$, calculation needs to be performed according to the probability P, and a value of $C_i[g_i(f)]$ is set to 0 or 1.

Then, whether the value obtained after probability calculation is 1 continues to be determined, that is, $C_i[g_i(f)]=1$?

continues to be performed, if the value obtained after probability calculation is still 0, the packet is not marked. If the value obtained after probability calculation is still 1, calculation continues to be performed according to a next Hash function, that is, i=i+1 is performed.

In this case, i<m+1? is determined and indicates whether the $N^{th}$ Hash function has been executed, and m represents N. If the $N^{th}$ Hash function has been executed, if i<m+1, calculation of a next Hash function continues to be performed. If i≥m+1, and values of N bits are all 1, the packet is marked as an elephant flow packet.

903: The communication device determines that bit values of N bits corresponding to a first packet of the target flow are all 1, and marks the first packet as the elephant flow packet. When determining that bit values of N bits corresponding to a second packet of the target flow are not all 1, the communication device does not mark the second packet.

For example, when N is 3, if values of three bits that are obtained after three Hash calculations are performed according to a 5-tuple of the first packet are all 1, the first packet is the elephant flow packet. Alternatively, if values of three bits that are obtained after three Hash calculations are performed according to a 5-tuple of the second packet are not all 1, the second packet is not marked.

904: When determining that network congestion occurs, the communication device updates a forwarding rate of the first packet, where an updated forwarding rate is less than an un-updated forwarding rate. Alternatively, when determining that network congestion occurs, the communication device discards the first packet.

An implementation of this step is similar to that of Step 706.

Therefore, in this application, when the packet of the flow is marked in a bit sequence manner, the continuous bit sequence is constructed, an operation is performed on the bit sequence in an existing data structure, and elephant flow and mice flow identification is performed on the packet in a probability marking and multiple Hash manner. Compared with that in use of a Hash table, the entry space required for storage is more efficiently used, an upper limit of a quantity of flows that can be processed increases, and the efficiency of identifying the elephant flow and the mice flow is better.

To further describe beneficial effects brought by Embodiment 2, this application provides a marking ratio test model for description.

In this model, it is assumed that there are 400 elephant flows and 8,000 mice flows. A bit sequence in the communication device is 2 K×16s bits=32,000 bits.

It is assumed that a probability P used to mark a packet is 0.005, and a quantity N of Hash times is 5. The communication device may count all packets in a received flow, and test a ratio of a packet that is marked as the elephant flow packet to the packets. Table 2 shows test results.

**Table 2**

| Flow class | Quantity of received packets | Quantity of packets marked as an elephant flow | Elephant flow marking ratio |
|---|---|---|---|
| Elephant flow | 26211 | 21628 | 82.51% |
| 1 KB to 100 KB random mice flow | 13741 | 40 | 0.29% |

It can be learned from Table 2 that, in the elephant flow, a marking ratio of the elephant flow packets is greater than 80%, and in the mice flow, a marking ratio of the elephant flow packets is less than 0.3%.

Therefore, in this application, the elephant and mice flows may be distinguished in a bit sequence manner in case of a limited resource. In the identification of the 8,400 flows, space of only 32,000 bits is used. On average, space less than 4 bits is used for each flow, and the identification effect is good.

It may be understood that, to implement the foregoing functions, the communication device includes corresponding hardware and/or software modules for performing the functions. Algorithm steps in the examples described with reference to embodiments disclosed in this specification can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

In this embodiment, the communication device may be divided into function modules based on the foregoing method examples. For example, each function module may be obtained through division based on each corresponding function, or two or more functions may be integrated into one processing module. The foregoing integrated module may be implemented in a form of hardware. It should be noted that, in this embodiment, division into the modules is an example, and is merely a logical function division. In actual implementation, another division manner may be used.

When each function module is obtained through division based on each corresponding function, FIG. 11 is a schematic diagram of a possible composition of a communication device 110 in the foregoing embodiments. As shown in FIG. 11, the communication device 110 may include a counting unit 1101, a marking unit 1102, a congestion processing unit 1103, and an updating unit 1104.

The counting unit 1101 may be configured to support the communication device 110 in performing Step 701, Step 703, and the like, and/or another process of the technology described in this specification.

The marking unit 1102 may be configured to support the communication device 110 in performing Step 702, Step 704, and the like, and/or another process of the technology described in this specification.

The congestion processing unit 1103 may be configured to support the communication device 110 in performing Steps 705, 706, and the like, and/or another process of the technology described in this specification.

The updating unit 1104 may be configured to support the communication device 110 in performing Step 707 and the like, and/or another process of the technology described in this specification.

It should be noted that all related content of the steps in the foregoing method embodiments may be cited in function description of corresponding function modules. Details are not described herein again.

The communication device 110 provided in this embodiment is configured to perform the foregoing method for identifying a flow, and therefore can achieve a same effect as the foregoing implementation method.

When an integrated unit is used, the communication device 110 may include a processing module, a storage module, and a communication module. The processing module may be configured to control and manage an action of the communication device 110, for example, may be configured to support the communication device 110 in performing the steps performed by the counting unit 1101, the marking unit 1102, the congestion processing unit 1103, and the updating unit 1104. The storage module may be configured to support the communication device 110 in storing program code, data, and the like. The communication module may be configured to support the communication device 110 in communicating with another device, for example, communicating with a terminal device, and receiving a packet from the terminal device.

The processing module may be a processor or a controller. The processor may implement or execute various example logical blocks, modules, and circuits described with reference to content disclosed in this application. The processor may alternatively be a combination of processors implementing a computing function, for example, a combination of one or more microprocessors or a combination of a digital signal processor (digital signal processing, DSP) and a microprocessor. The storage module may be a memory. The communication module may be specifically a device that interacts with another electronic device, such as a radio frequency circuit, a Bluetooth chip, or a Wi-Fi chip.

In an embodiment, when the processing module is a processor, the storage module is a memory, and the communication module is a transceiver, the electronic device in this embodiment may be a switch having a structure shown in FIG. 12.

When each function module is obtained through division based on each corresponding function, FIG. 13 is a schematic diagram of a possible composition of a communication device 130 in the foregoing embodiments. As shown in FIG. 13, the communication device 130 may include a bit determining unit 1301, a bit value determining unit 1302, a marking unit 1303, and a congestion processing unit 1304.

The bit determining unit 1101 may be configured to support the communication device 130 in performing Step 901, and/or another process of the technology described in this specification.

The bit value determining unit 1302 may be configured to support the communication device 130 in performing Step 902 and the like, and/or another process of the technology described in this specification.

The marking unit 1303 may be configured to support the communication device 130 in performing the Step 903 and the like, and/or another process of the technology described in this specification.

The congestion processing unit 1304 may be configured to support the communication device 130 in performing Step 904 and the like, and/or another process of the technology described in this specification.

It should be noted that all related content of the steps in the foregoing method embodiments may be cited in function description of corresponding function modules. Details are not described herein again.

The communication device 130 provided in this embodiment is configured to perform the foregoing method for identifying a flow, and therefore can achieve a same effect as the foregoing implementation method.

When an integrated unit is used, the communication device 130 may include a processing module, a storage module, and a communication module. The processing module may be configured to control and manage an action of the communication device 130, for example, may be configured to support the communication device 130 in performing the steps performed by the bit determining unit 1301, the bit value determining unit 1302, the marking unit 1303, and the congestion processing unit 1304. The storage module may be configured to support the communication device 130 in storing program code, data, and the like. The communication module may be configured to support the communication device 130 in communicating with another device, for example, communicating with a terminal device, and receiving a packet from the terminal device.

The processing module may be a processor or a controller. The processor may implement or execute various example logical blocks, modules, and circuits described with reference to content disclosed in this application. The processor may alternatively be a combination of processors implementing a computing function, for example, a combination of one or more microprocessors, or a combination of a DSP and a microprocessor. The storage module may be a memory. The communication module may be specifically a device that interacts with another electronic device, such as a radio frequency circuit, a Bluetooth chip, or a Wi-Fi chip.

In an embodiment, when the processing module is a processor, the storage module is a memory, and the communication module is a transceiver, the communication device 130 in this embodiment may also be a switch having a structure shown in FIG. 12.

An embodiment of this application further provides an electronic device, including one or more processors and one or more memories. The one or more memories are coupled to the one or more processors. The one or more memories are configured to store computer program code. The computer program code includes computer instructions. When the one or more processors execute the computer instructions, the electronic device is enabled to perform the foregoing related method steps, to implement the method for identifying a flow in the foregoing embodiments.

An embodiment of this application further provides a computer-readable storage medium. The computer-readable storage medium stores computer instructions. When the computer instructions are run on an electronic device, the electronic device is enabled to perform the foregoing related method steps, to implement the method for identifying a flow in the foregoing embodiments.

An embodiment of this application further provides a computer program product. When the computer program product runs on a computer, the computer is enabled to perform the foregoing related steps, to implement the method for identifying a flow in the foregoing embodiments performed by an electronic device.

In addition, an embodiment of this application further provides an apparatus. The apparatus may be specifically a chip, a component, or a module. The apparatus may include a processor and a memory that are connected. The memory is configured to store computer-executable instructions. When the apparatus runs, the processor may execute the computer-executable instructions stored in the memory, to enable the chip to perform the method for identifying a flow in the foregoing method embodiments performed by an electronic device.

The communication device, the computer-readable storage medium, the computer program product, or the chip provided in the embodiments is configured to perform the corresponding method provided above. Therefore, for beneficial effects that can be achieved by the communication device, the computer-readable storage medium, the computer program product, or the chip, refer to the beneficial effects in the corresponding method provided above. Details are not described herein again.

Based on the description of the foregoing implementations, it may be understood by a person skilled in the art that, for ease and brevity of description, division of the foregoing function modules is merely used as an example for description. In actual application, the foregoing functions may be allocated to different function modules for implementation according to a requirement, that is, an internal structure of the apparatus is divided into different function modules, to implement all or some of the functions described above.

In the several embodiments provided in this application, it should be understood that the disclosed apparatuses and methods may be implemented in other manners. For example, the described apparatus embodiment is merely an example. For example, division into modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may be one or more physical units, may be located in one place, or may be distributed in a plurality of different places. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The foregoing integrated unit may be implemented in a form of hardware, or may be implemented in a form of a software functional unit.

When being implemented in the form of the software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in a form of a software product. The software product is stored in a storage medium, and includes a plurality of instructions for instructing a device (which may be a single-chip microcomputer, a chip, or the like) or a processor (processor) to perform all or some of the steps of the method in embodiments of this application. The foregoing storage medium includes any medium that can store program code, such as a USB flash drive, a removable hard disk, a read-only memory (read only memory, ROM), a random access memory (random access memory, RAM), a magnetic disk, or an optical disc.

The foregoing content is merely specific implementations of this application, but is not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for identifying a flow, comprising:

   counting, by a communication device starting from an initial packet of a target flow, a received packet in a first filtering manner; and
   marking, by the communication device when determining that a quantity of the received packets of the target flow is greater than or equal to a first threshold, starting from a packet that exceeds the first threshold, a packet whose count is a multiple of m, wherein m is an integer greater than or equal to 2; or
   when determining that a quantity of the received packets of the target flow is greater than or equal to a second threshold, counting, by the communication device in a second filtering manner, a packet that is continuously received; or
   when determining that a quantity of the received packets of the target flow is greater than or equal to a third threshold, determining, by the communication device, that the target flow is an elephant flow, and marking a packet that is continuously received.

2. The method according to claim 1, wherein the method further comprises:

   when determining that network congestion occurs, updating, by the communication device, a forwarding rate of the marked packet, wherein an updated forwarding rate is less than an un-updated forwarding rate; or
   when determining that network congestion occurs, discarding, by the communication device, the marked packet in the target flow.

3. The method according to claim 1 or 2, wherein a data structure used in the first filtering manner is a Bloom filter; and the counting a received packet in a first filtering manner comprises:
   mapping, by using a Hash function and a vector that correspond to the Bloom filter, the received packet of the target flow to a vector location corresponding to the target flow in a one-to-one manner, wherein a count of the corresponding vector location during each mapping increases by 1.

4. The method according to any one of claims 1 to 3, wherein the marking, by the communication device when determining that a quantity of the received packets of the target flow is equal to a first threshold, starting from a packet that exceeds the first threshold, a packet whose count is a multiple of m comprises:

   when determining that the quantity of the received packets of the target flow is equal to the first threshold, determining, by the communication device, that the target flow is a candidate elephant flow; and
   marking, starting from the packet that exceeds the first threshold, a packet whose count is a multiple of $2^p$, wherein $m=2^p$, and p is an integer greater than or equal to 1.

5. The method according to any one of claims 1 to 4, wherein a data structure used in the second filtering manner is a sketch data structure; and
   the counting, in a second filtering manner, a packet that is continuously received comprises:
   mapping, in the second filtering manner, the packet that is continuously received to $w \times d$ counters by using d Hash functions, and determining a minimum value in counting results of the $w^d$ counters as a quantity of currently received packets, wherein w and d are integers greater than 1.

6. The method according to any one of claims 1 to 5, wherein the method further comprises:
   updating, by the communication device, the third threshold based on accuracy of receiving a packet by the communication device and a false positive rate.

7. A communication device, comprising:

   a counting unit, configured to count, starting from an initial packet of a target flow, a received packet in a first filtering manner; and

a marking unit, configured to: when it is determined that a quantity of the received packets of the target flow is greater than or equal to a first threshold, mark, starting from a packet that exceeds the first threshold, a packet whose count is a multiple of m, wherein m is an integer greater than or equal to 2; or

the counting unit is further configured to: when it is determined that a quantity of the received packets of the target flow is greater than or equal to a second threshold, count, in a second filtering manner, a packet that is continuously received; or

the marking unit is further configured to: when it is determined that a quantity of the received packets of the target flow is greater than or equal to a third threshold, determine that the target flow is an elephant flow, and mark a packet that is continuously received.

**8.** The communication device according to claim 7, further comprising a congestion processing unit, configured to:

when it is determined that network congestion occurs, update a forwarding rate of the marked packet, wherein an updated forwarding rate is less than an un-updated forwarding rate; or

when it is determined that network congestion occurs, discard the marked packet in the target flow.

**9.** The communication device according to claim 7 or 8, wherein a data structure used in the first filtering manner is a Bloom filter; and
the counting unit is specifically configured to:
map, by using a Hash function and a vector that correspond to the Bloom filter, the received packet of the target flow to a vector location corresponding to the target flow in a one-to-one manner, wherein a count of the corresponding vector location during each mapping increases by1.

**10.** The communication device according to any one of claims 7 to 9, wherein the marking unit is specifically configured to:

when it is determined that the quantity of the received packets of the target flow is equal to the first threshold, determine that the target flow is a candidate elephant flow; and

mark, starting from the packet that exceeds the first threshold, a packet whose count is a multiple of $2^p$, wherein $m=2^p$, and p is an integer greater than or equal to 1.

**11.** The communication device according to any one of claims 7 to 10, wherein a data structure used in the second filtering manner is a sketch data structure; and
the counting unit is specifically configured to:
map, in the second filtering manner, the packet that is continuously received to $w \times d$ counters by using d Hash functions, and determine a minimum value in counting results of the $w^d$ counters as a quantity of currently received packets, wherein w and d are integers greater than 1.

**12.** The communication device according to any one of claims 7 to 11, further comprising an updating, unit configured to:
update the third threshold based on accuracy of receiving a packet by the communication device and a false positive rate.

**13.** A computer-readable storage medium, comprising computer instructions, wherein when the computer instructions are run on an electronic device, the electronic device is enabled to perform the method according to any one of claims 1 to 6.

**14.** A chip, wherein the chip is coupled to a memory, the chip is configured to read and execute program instruction stored in the memory, to implement the method according to any one of claims 1 to 6.

**15.** A communications device, wherein the communications device comprises a memory and a processor, the memory is coupled to the processor, the memory is configured to store computer program code, when the computer program code is executed by the processor, cause the communications device implements the method according to any one of claims 1 to 6.

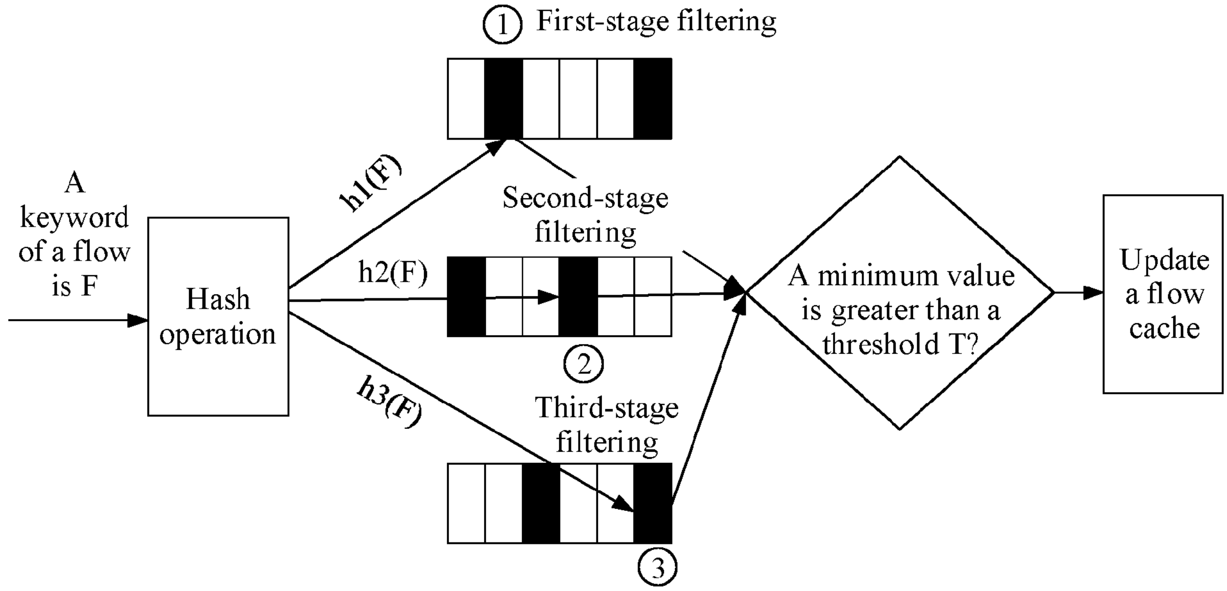


FIG. 1

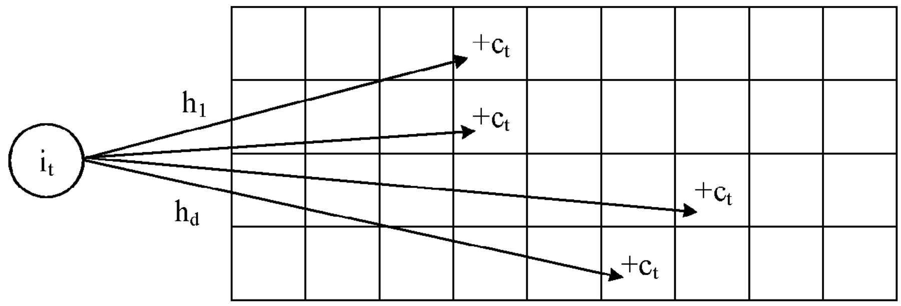


FIG. 2

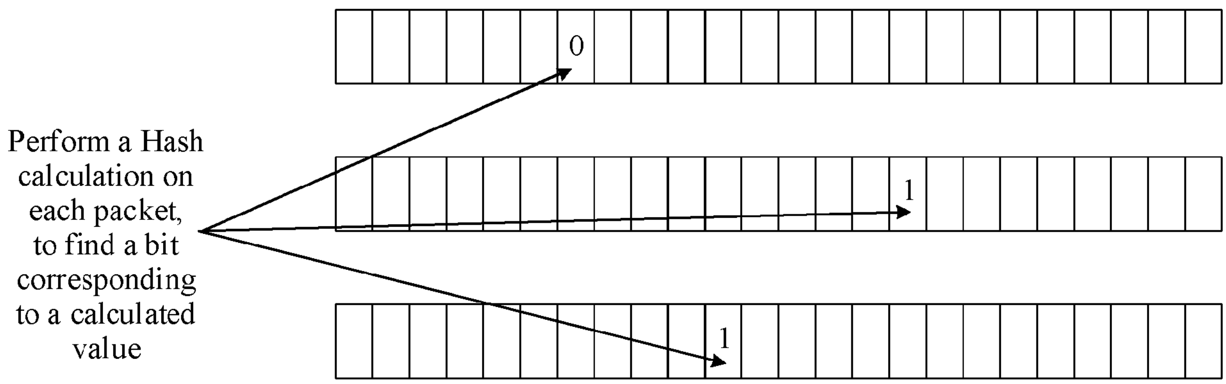


FIG. 3

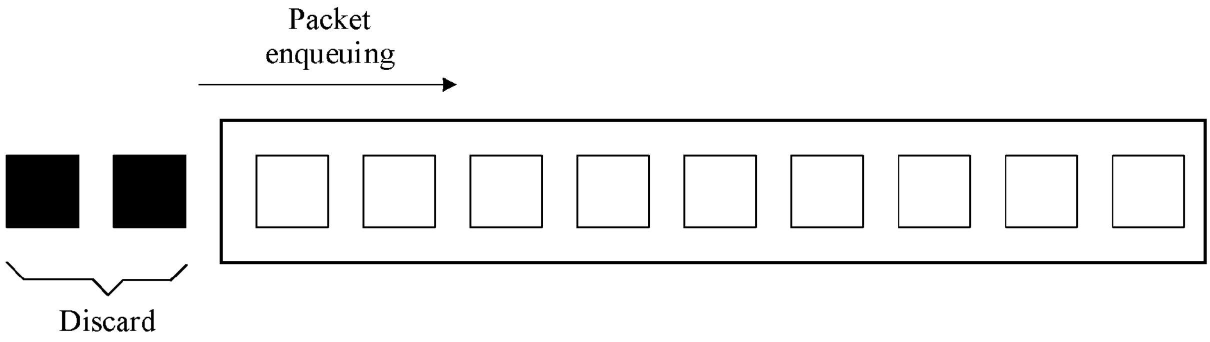


FIG. 4

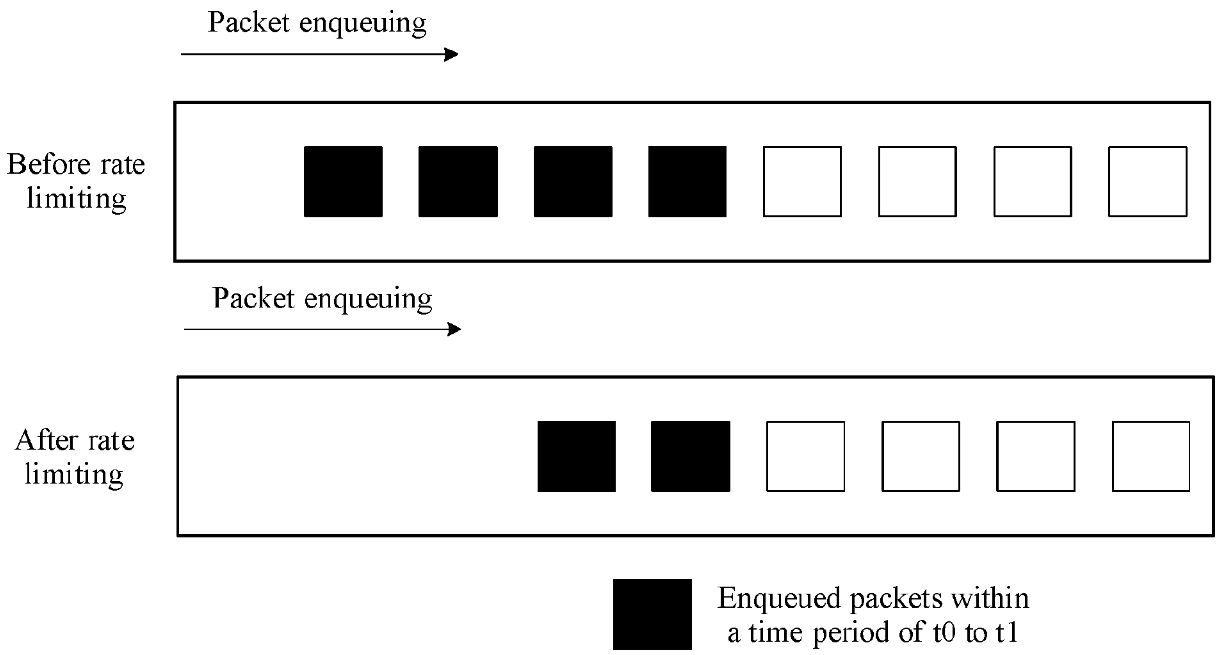


FIG. 5

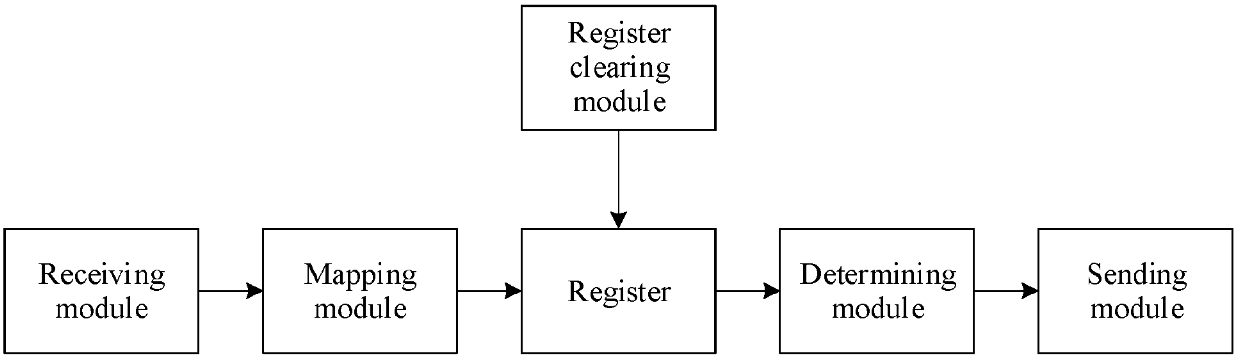


FIG. 6

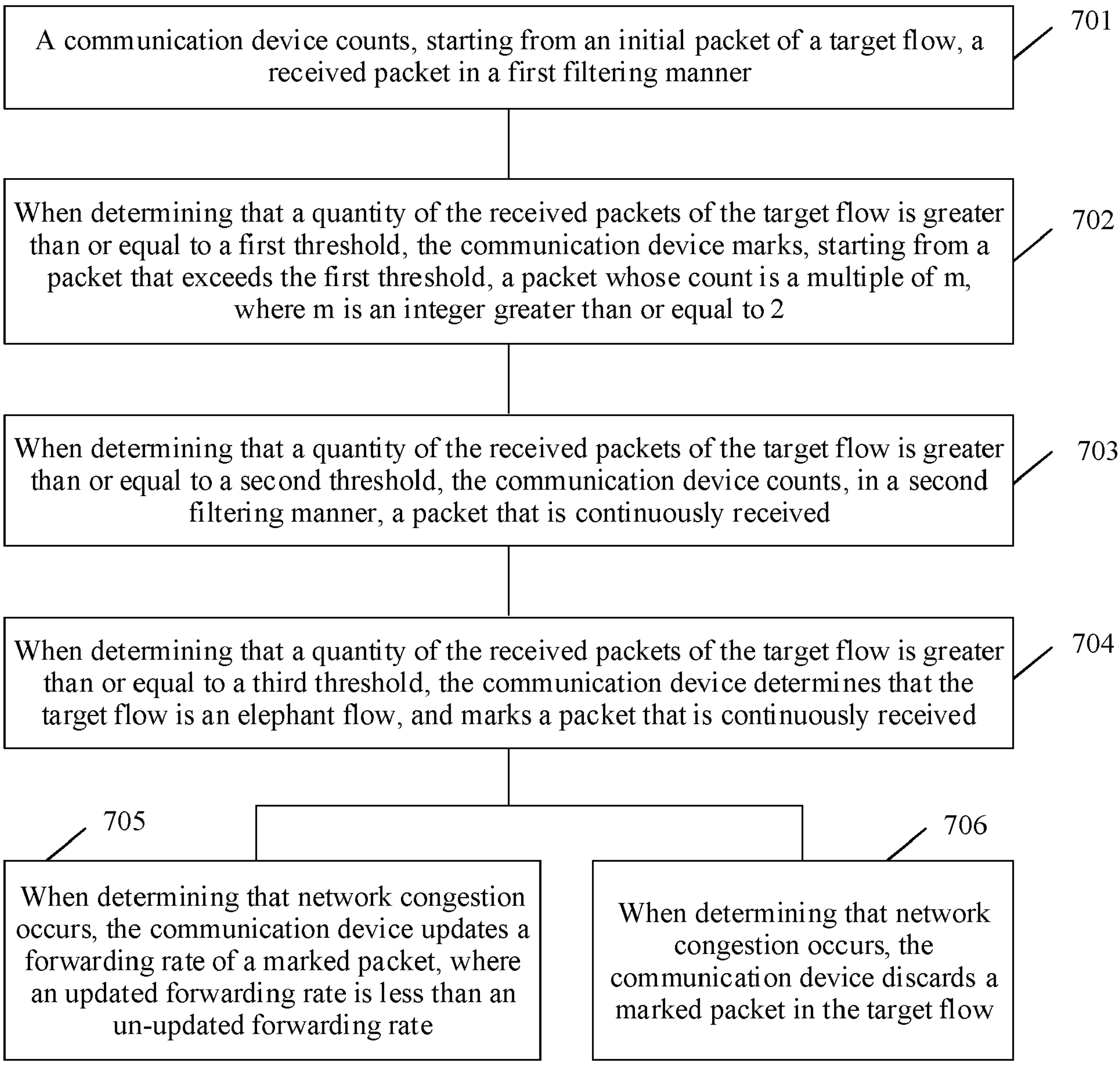
A communication device counts, starting from an initial packet of a target flow, a received packet in a first filtering manner
701
When determining that a quantity of the received packets of the target flow is greater than or equal to a first threshold, the communication device marks, starting from a packet that exceeds the first threshold, a packet whose count is a multiple of m, where m is an integer greater than or equal to 2
702
When determining that a quantity of the received packets of the target flow is greater than or equal to a second threshold, the communication device counts, in a second filtering manner, a packet that is continuously received
703
When determining that a quantity of the received packets of the target flow is greater than or equal to a third threshold, the communication device determines that the target flow is an elephant flow, and marks a packet that is continuously received
704
705
When determining that network congestion occurs, the communication device updates a forwarding rate of a marked packet, where an updated forwarding rate is less than an un-updated forwarding rate
706
When determining that network congestion occurs, the communication device discards a marked packet in the target flow

FIG. 7

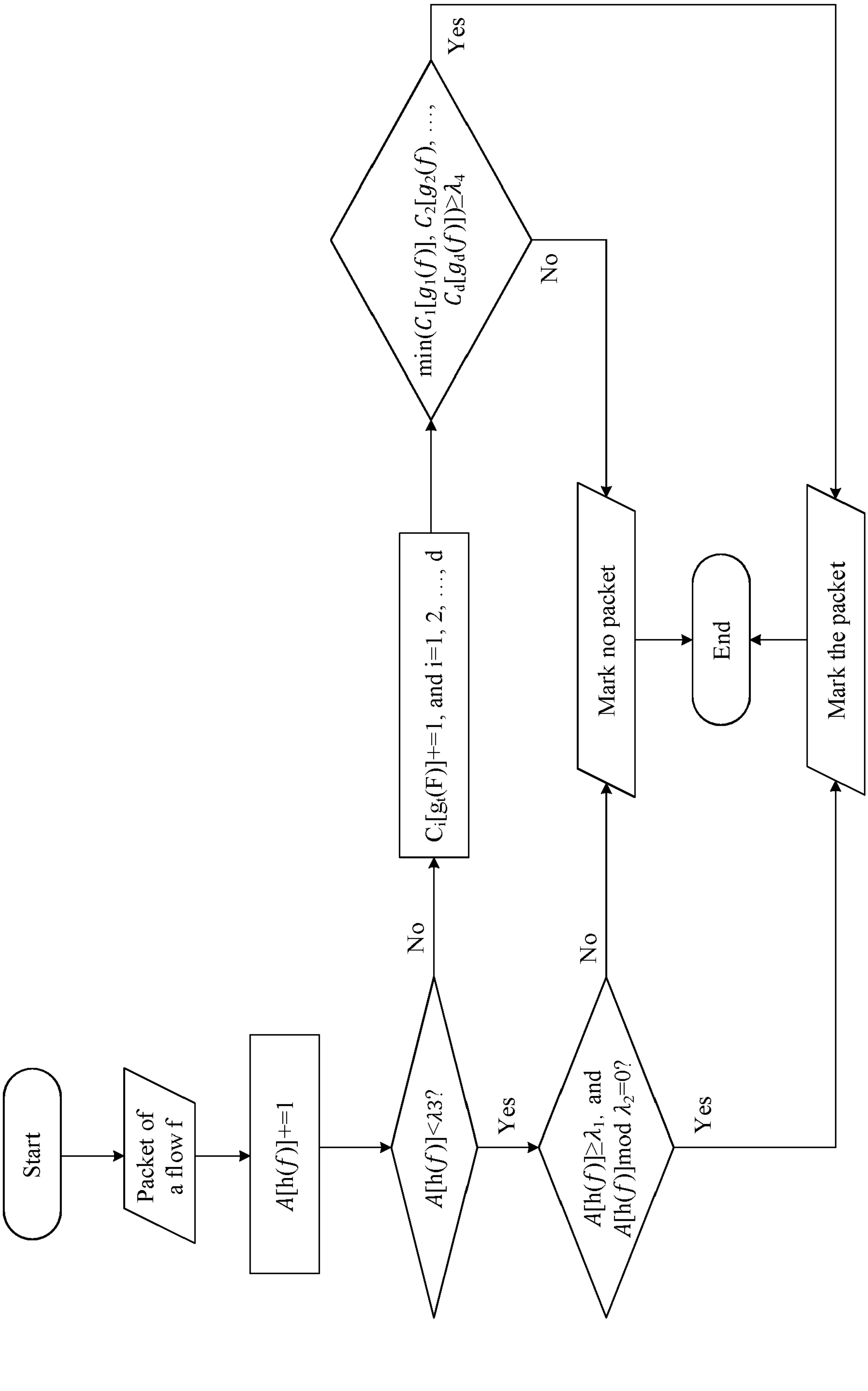
Start
Packet of a flow f
A[h(f)]+=1
A[h(f)]<λ3?
Yes
No
A[h(f)]≥λ1, and A[h(f)]mod λ2=0?
Yes
No
Ci[gt(F)]+=1, and i=1, 2, ..., d
min(C1[g1(f)], C2[g2(f)], ..., Cd[gd(f)])≥λ4
Yes
No
Mark no packet
Mark the packet
End

FIG. 8

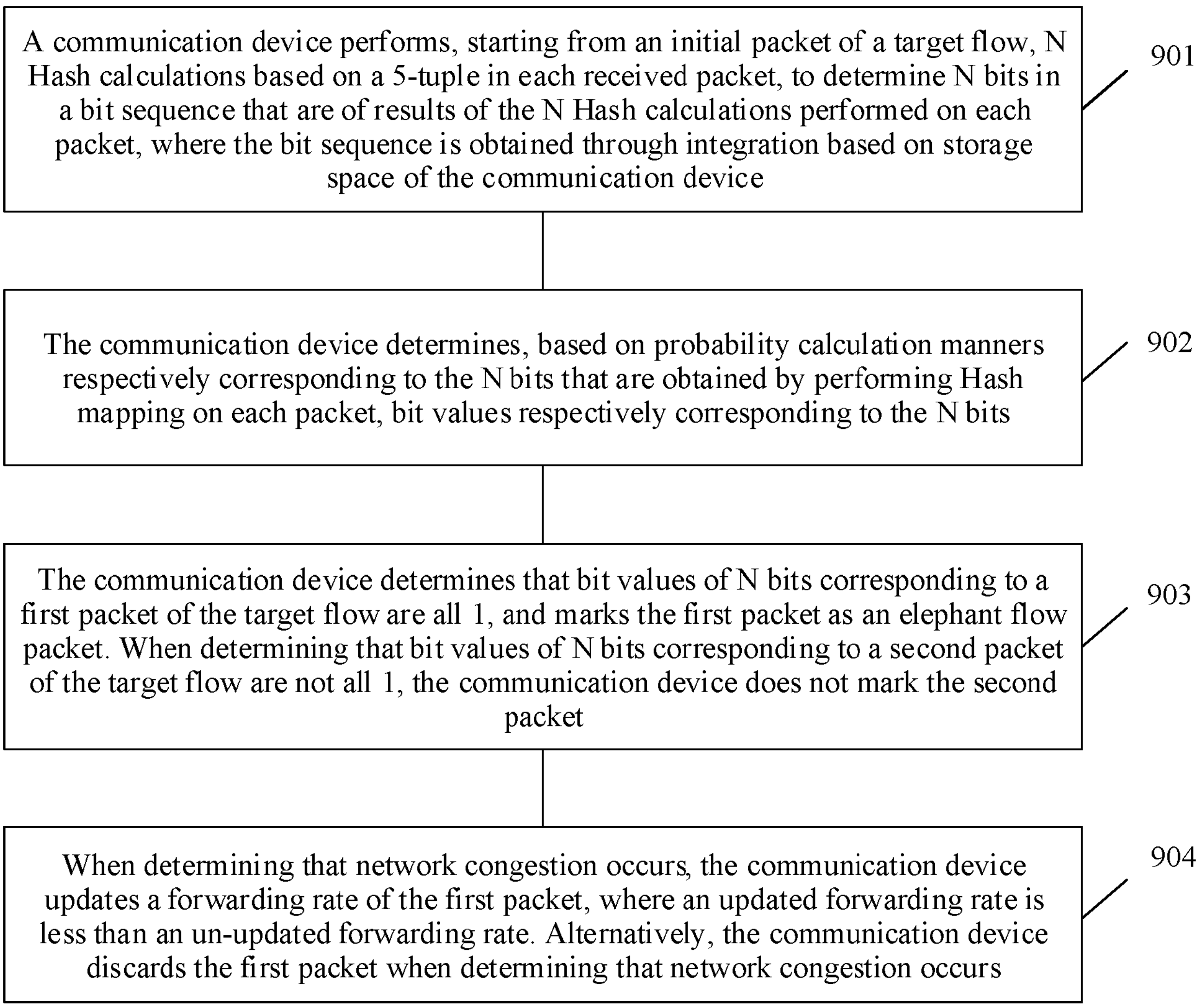
A communication device performs, starting from an initial packet of a target flow, N Hash calculations based on a 5-tuple in each received packet, to determine N bits in a bit sequence that are of results of the N Hash calculations performed on each packet, where the bit sequence is obtained through integration based on storage space of the communication device
901
The communication device determines, based on probability calculation manners respectively corresponding to the N bits that are obtained by performing Hash mapping on each packet, bit values respectively corresponding to the N bits
902
The communication device determines that bit values of N bits corresponding to a first packet of the target flow are all 1, and marks the first packet as an elephant flow packet. When determining that bit values of N bits corresponding to a second packet of the target flow are not all 1, the communication device does not mark the second packet
903
When determining that network congestion occurs, the communication device updates a forwarding rate of the first packet, where an updated forwarding rate is less than an un-updated forwarding rate. Alternatively, the communication device discards the first packet when determining that network congestion occurs
904

FIG. 9

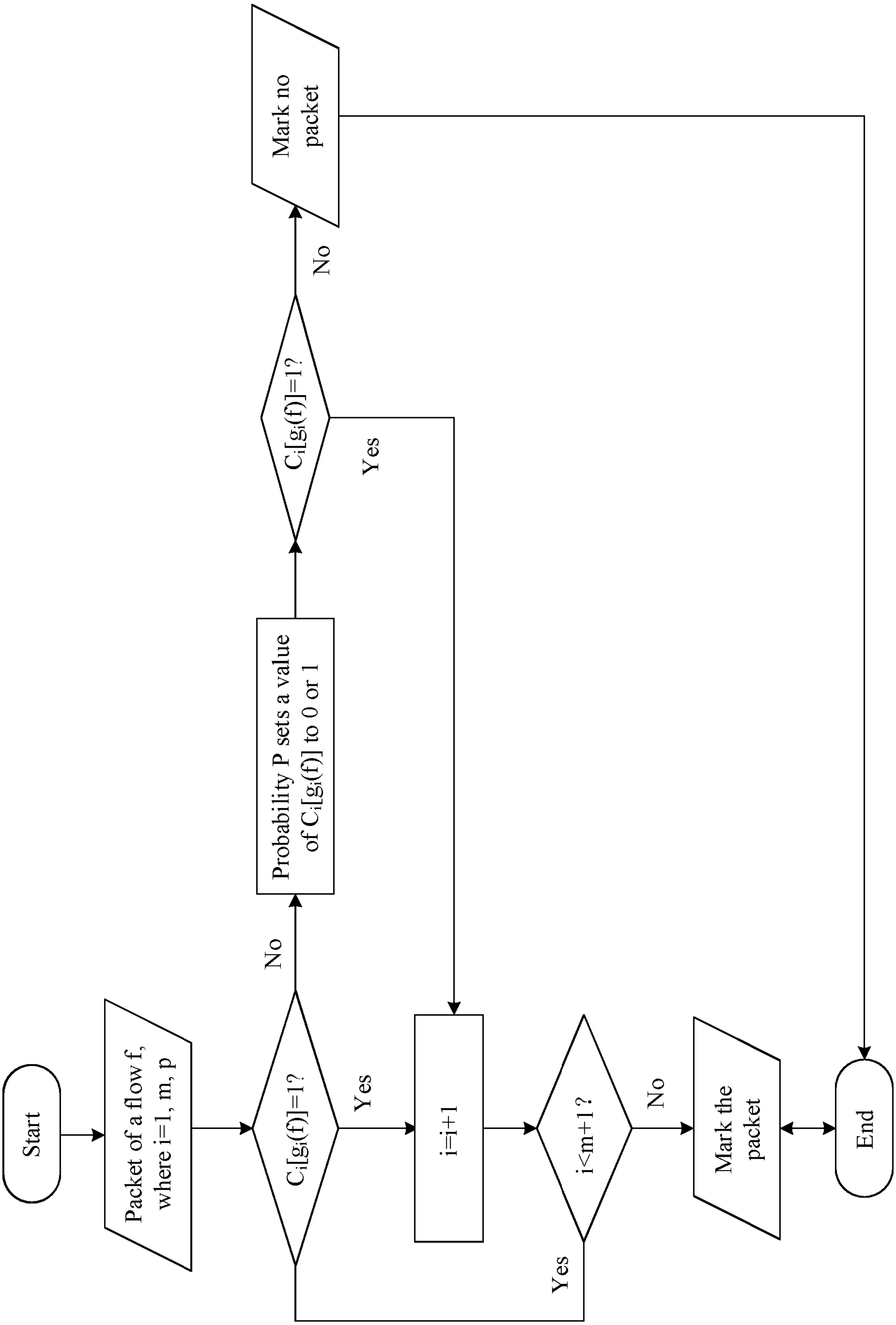
Start
Packet of a flow f, where i=1, m, p
$C_i[g_i(f)]=1$?
Yes
No
Probability P sets a value of $C_i[g_i(f)]$ to 0 or 1
$C_i[g_i(f)]=1$?
No
Yes
Mark no packet
i=i+1
i<m+1 ?
Yes
No
Mark the packet
End

FIG. 10

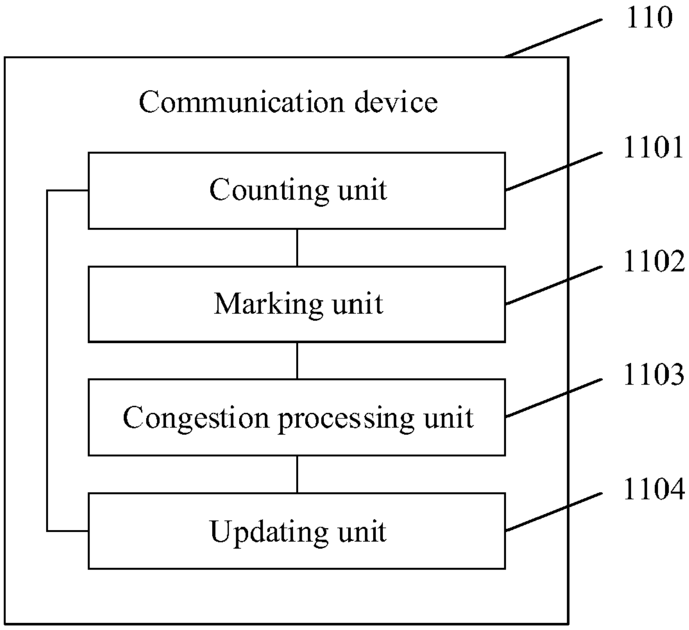
110
Communication device
Counting unit
1101
Marking unit
1102
Congestion processing unit
1103
Updating unit
1104

FIG. 11

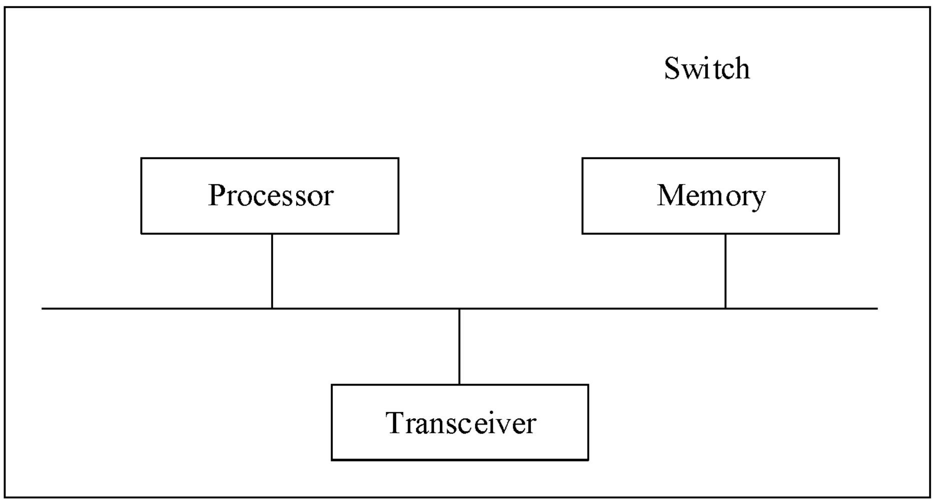
Switch
Processor
Memory
Transceiver

FIG. 12

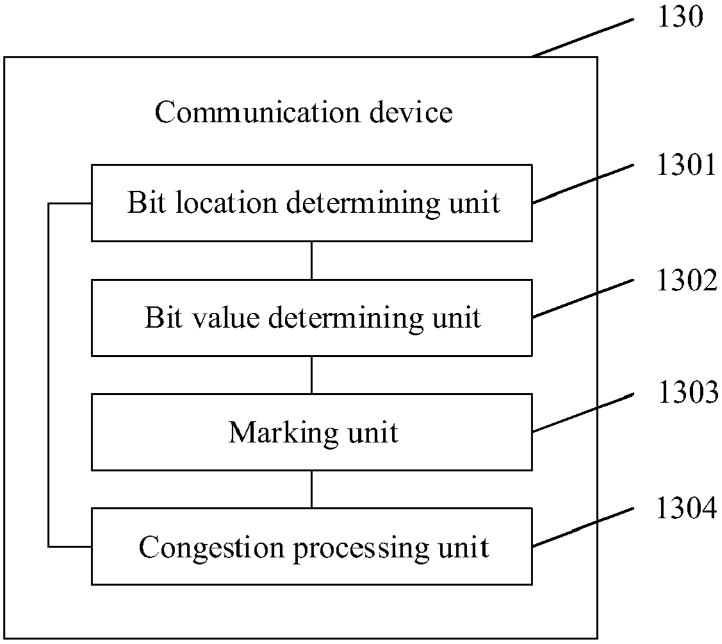
130
Communication device
Bit location determining unit
1301
Bit value determining unit
1302
Marking unit
1303
Congestion processing unit
1304

FIG. 13

Europäisches Patentamt
European Patent Office
Office européen des brevets

# EUROPEAN SEARCH REPORT

Application Number
EP 22 20 6799

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br><br>Y | US 9 191 225 B2 (MARTIN CECILIA [US]; HUBER JOHN [US] ET AL.) 17 November 2015 (2015-11-17)<br>* column 6, line 12 - line 26; figure 2 *<br>* figure 4 *<br>* column 5, line 50 - line 55 *<br>----- | 1-5, 7-11, 13-15<br><br>6,12 | INV.<br>H04L47/2483<br>H04L47/25 |
| Y | MARCUS VINICIUS BRITO DA SILVA ET AL: "Identifying elephant flows using dynamic thresholds in programmable IXP networks", JOURNAL OF INTERNET SERVICES AND APPLICATIONS, BIOMED CENTRAL LTD, LONDON, UK, vol. 11, no. 1, 10 December 2020 (2020-12-10), pages 1-12, XP021285422, ISSN: 1867-4828, DOI: 10.1186/S13174-020-00131-6<br>* section 4.2; page 6 *<br>----- | 6,12 | |
| | | | TECHNICAL FIELDS SEARCHED (IPC) |
| | | | H04L |

The present search report has been drawn up for all claims

1

| Place of search | Date of completion of the search | Examiner |
|---|---|---|
| The Hague | 20 February 2023 | Tsuchiya, Kuni |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 22 20 6799

This annex lists the patent family members relating to the patent documents cited in the above-mentioned European search report.
The members are as contained in the European Patent Office EDP file on
The European Patent Office is in no way liable for these particulars which are merely given for the purpose of information.

20-02-2023

| Patent document cited in search report | Publication date | Patent family member(s) | Publication date |
|---|---|---|---|
| US 9191225 B2 | 17-11-2015 | US 2008225740 A1 | 18-09-2008 |
| | | US 2011087779 A1 | 14-04-2011 |
| | | US 2016072685 A1 | 10-03-2016 |
| | | WO 2008112505 A1 | 18-09-2008 |

EPO FORM P0459

For more details about this annex : see Official Journal of the European Patent Office, No. 12/82